# EUROPEAN PATENT SPECIFICATION

(11) **EP 4 504 011 B1**
(45) Date of publication and mention of the grant of the patent: **21.10.2026**
(21) Application number: 23715887.8
(22) Date of filing: 06.04.2023
(51) Int. Cl.: A47J 31/44, A47J 31/60

(54) **DEVICE FOR FROTHING MILK**
VORRICHTUNG ZUM AUFSCHÄUMEN VON MILCH
DISPOSITIF DE MOUSSAGE DE LAIT

(30) Priority: 09.05.2022 IT 202200009536
(43) Date of publication of application: 12.02.2025
(73) Proprietor: De' Longhi Appliances S.r.l., 31100 Treviso (IT)
(72) Inventor: PANCIERA, Antonio, 31100 Treviso (IT); ROSETTA, Simone, 31100 Treviso (IT); SARTORI, Eros, 31100 Treviso (IT)
(74) Representative: Rapisardi, Mariacristina
(86) International application number: PCT/EP2023/059131
(87) International publication number: WO 2023/217467

(56) References cited:
- EP-A1- 2 218 377
- EP-A1- 2 277 419
- EP-A1- 2 896 332
- EP-B1- 3 518 713
- DE-U1- 202005 021 777

## Description

The present invention refers to a device for frothing milk.

Device for frothing milk that can be associated with a coffee machine have long been known. Some types of known devices comprise a milk container provided with a lid incorporating a Venturi-effect mixing chamber where air and milk collected from the container are mixed by Venturi-effect triggered by a steam flow.

Such known devices for frothing milk may complain of drawbacks including the complexity of accessing internal components for inspection and cleaning.

This problem is quite relevant if one thinks that any milk residues that solidify inside the device can create blockages of the milk flow passage openings and thus alter the efficiency of the device.

Last but not least, milk residues that solidify inside the device can also negatively affect the organoleptic characteristics of the product and generate unpleasant malodorous exhalations.

For this reason, such devices can provide for the injection of liquid detergents for washing the internal parts which obviously must be carefully rinsed.

EP 2 896 332 A1 discloses a device associable with a steam dispensing nozzle of a coffee machine for the production of a milk-based beverage; EP 2 277 419 A1 teaches an automatic drink dispenser; EP 3 518 713 B1 discloses a milk emulsifying device with a venturi effect and a production method of hot milk with and without froth using the device; EP 2 218 377 A1 teaches a device and a process for the entrainment of a liquid in a emulsifying device of a coffee machine.

The technical task of the present invention is therefore to realize a device for processing a device for frothing milk which makes it possible to eliminate the decried technical drawbacks of the prior art.

Within the context of this technical task, an object of the invention is to realize a device for frothing milk that can be easily inspected and cleaned.

The technical task, as well as these and other objects, according to the present invention are achieved by realizing a device for frothing milk according to Claim 1.

The construction of the device for frothing milk is particularly advantageous in that, simply by providing a kit of two or more milk containers to be associated each time with the lid depending on the type of milk (for example animal or vegetable) used, *allows to minimize the risk of contamination,* between the milk beverages obtained from subsequent dispensings; this in contrast to what happens in traditional devices in which the same milk suction conduit is always the one that, by dipping into the milk present each time in the milk container, contaminates a milk beverage with residues of the milk beverage produced in the previous preparation cycle.

In a preferred embodiment of the invention said first truncated tube is formed in one piece with said container.

In a preferred embodiment of the invention said first truncated tube extends vertically from a bottom of said container at which it has a milk inlet route.

In a preferred embodiment of the invention said lid has a first part and a second part which are removably engageable, where said first part of lid houses said manifold body and said second part of lid houses said steam injector.

In a preferred embodiment of the invention said steam injector comprises an injection conduit having a first terminal for coupling connection in said manifold body and a second terminal for coupling connection with a steam dispenser.

In a preferred embodiment of the invention said first connection terminal and said second connection terminal have transverse coupling axes.

In a preferred embodiment of the invention said transverse coupling axes are horizontal.

In a preferred embodiment of the invention said injection conduit has a 90° bend.

In a preferred embodiment of the invention said lid houses a conduit for collecting air from the external atmospheric environment, where said air collection conduit is connected to said air suction opening and comprises a first air collection conduit housed in said first part of lid and a second air collection conduit housed in said second part of lid.

In a preferred embodiment of the invention said first part of air collection conduit and said second part of air collection conduit have mutual connection terminals having a coupling axis parallel to the coupling axis of said first connection terminal of said steam injection conduit.

In a preferred embodiment of the invention said first part of lid has a portion for closing the milk container surmounted by a compartment for housing said second part of lid.

In a preferred embodiment of the invention said compartment matches the external outline of said second part of lid.

In a preferred embodiment of the invention said compartment has walls for guiding the sliding of said second part of lid in the direction of said coupling axis of said first terminal.

In a preferred embodiment of the invention said compartment is configured like an insertion slot of said second part of lid.

Further characteristics and advantages of the invention will more fully emerge from the description of a preferred but not exclusive embodiment of the device for frothing milk according to the invention, illustrated by way of non-limiting example in the appended drawings, wherein:

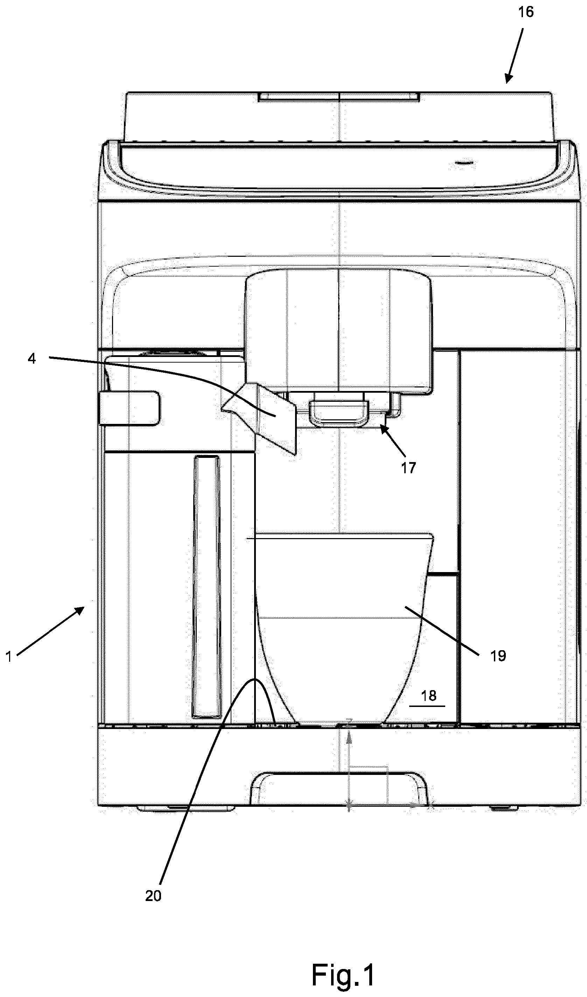

figure 1 shows a front view of a coffee machine including the device for frothing milk;

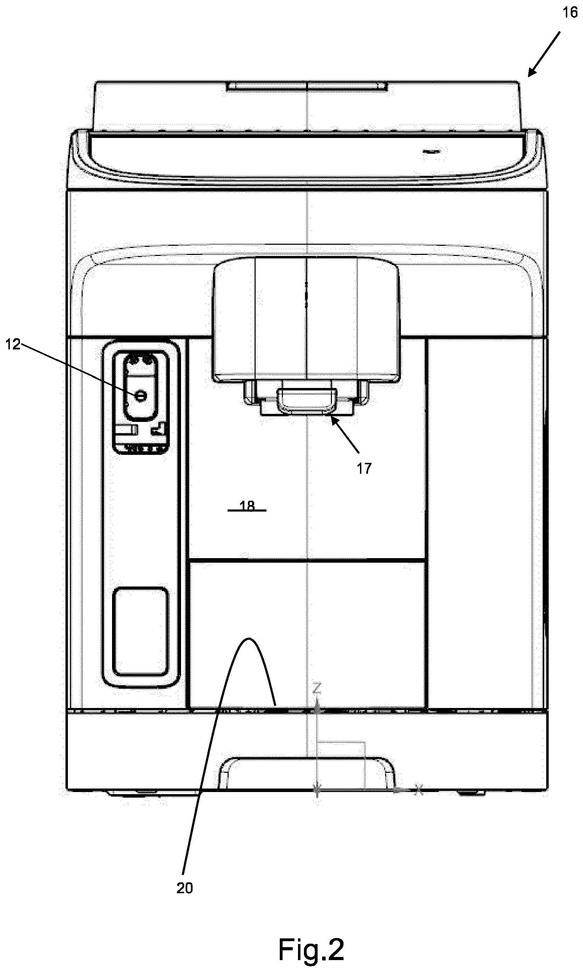

figure 2 shows a front view of the coffee machine of figure 1 from which the device for frothing milk was removed;

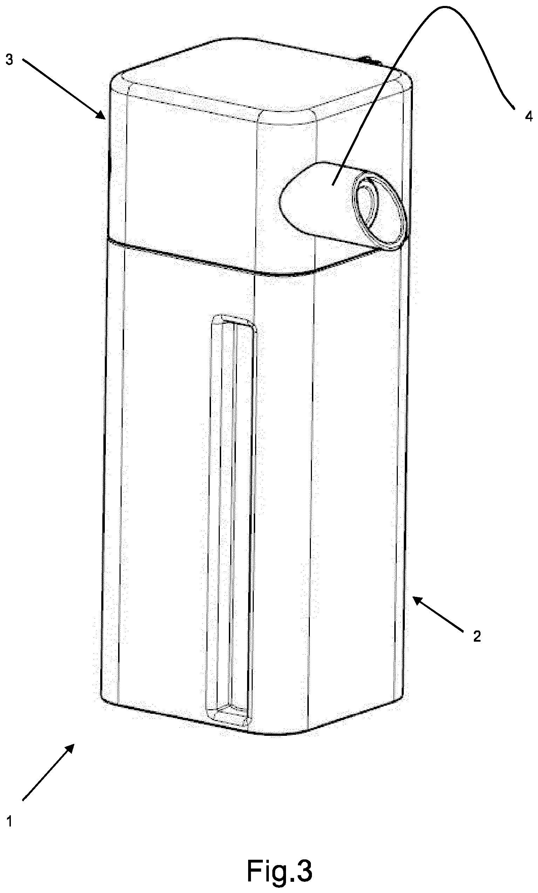

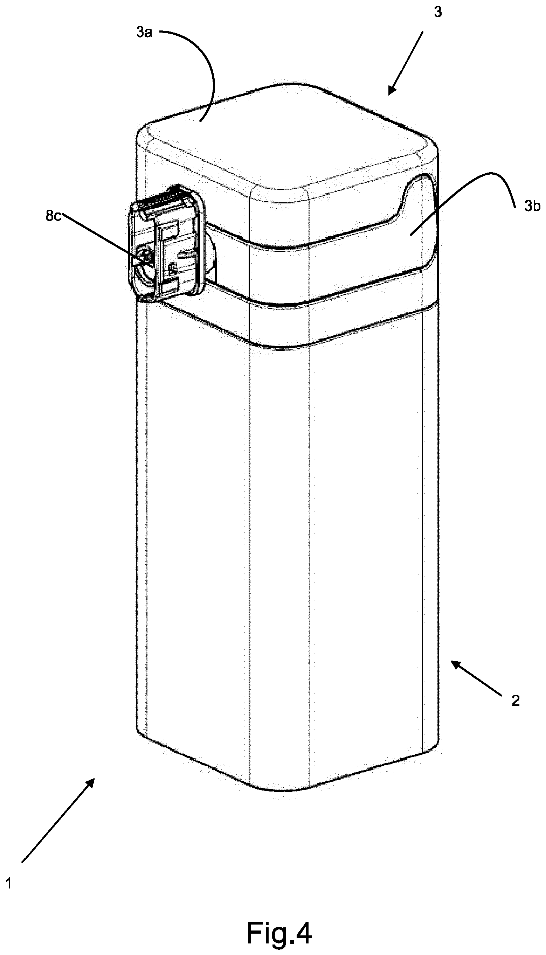

figures 3 and 4 show axonometric views of the device for frothing milk;

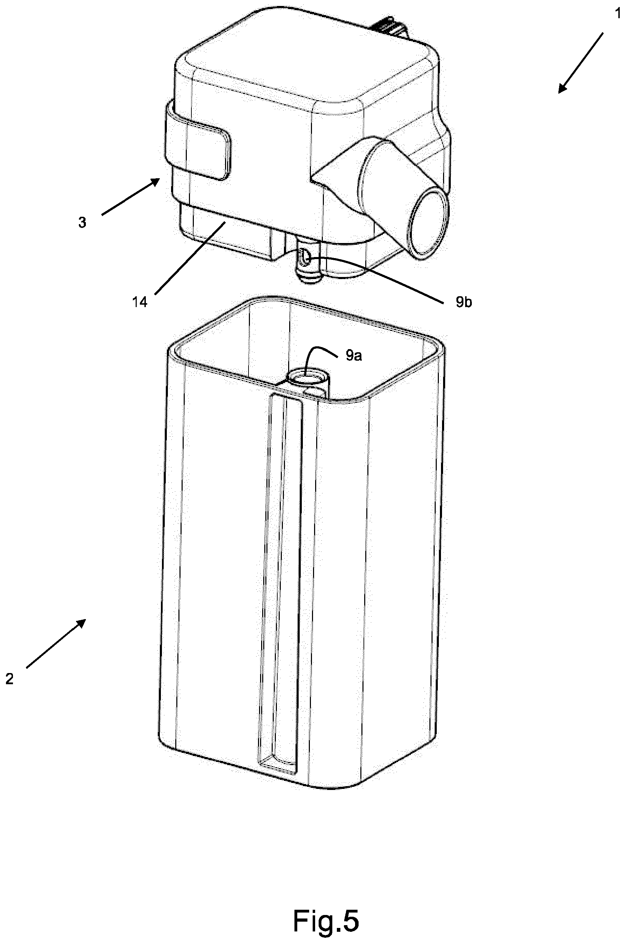

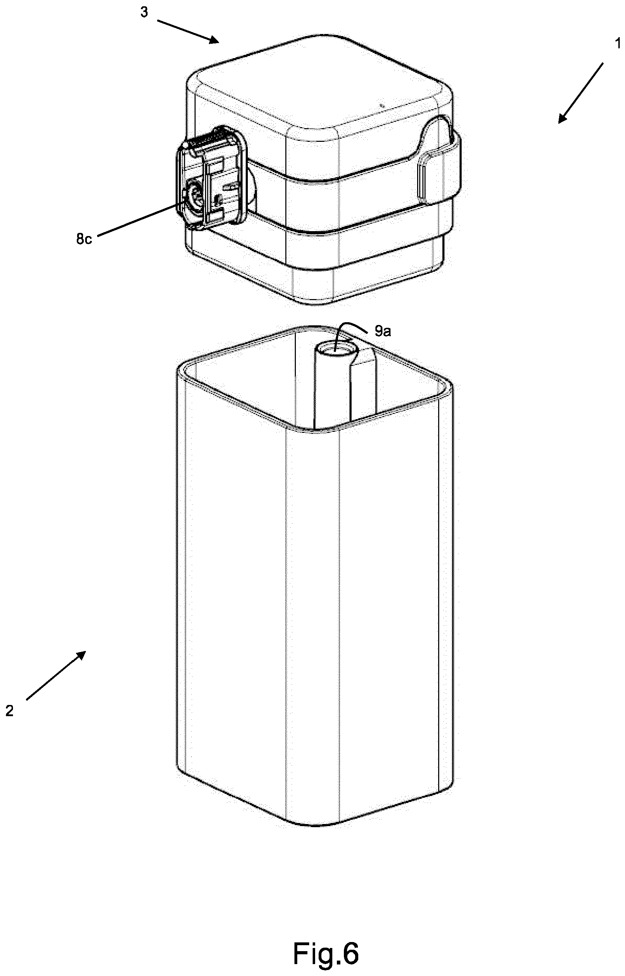

figures 5 and 6 show the device for frothing milk with the lid separated from the milk container;

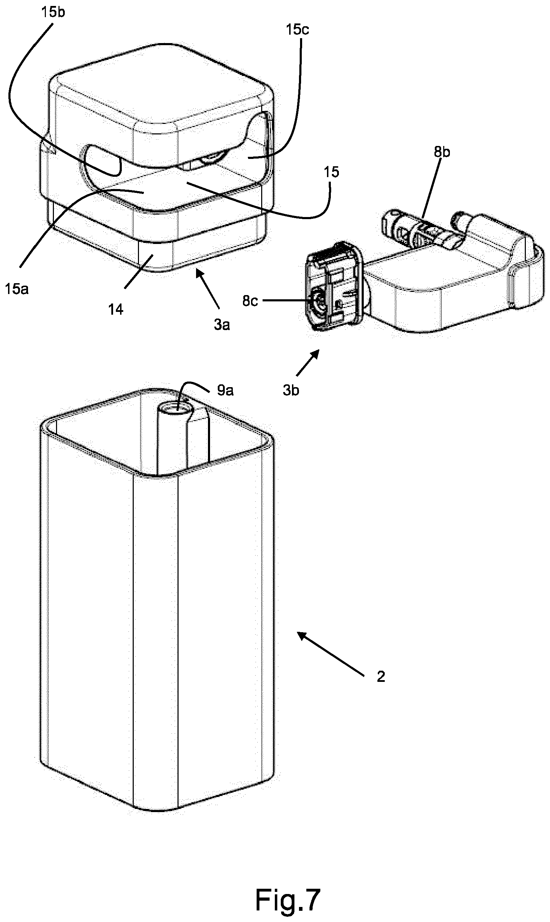

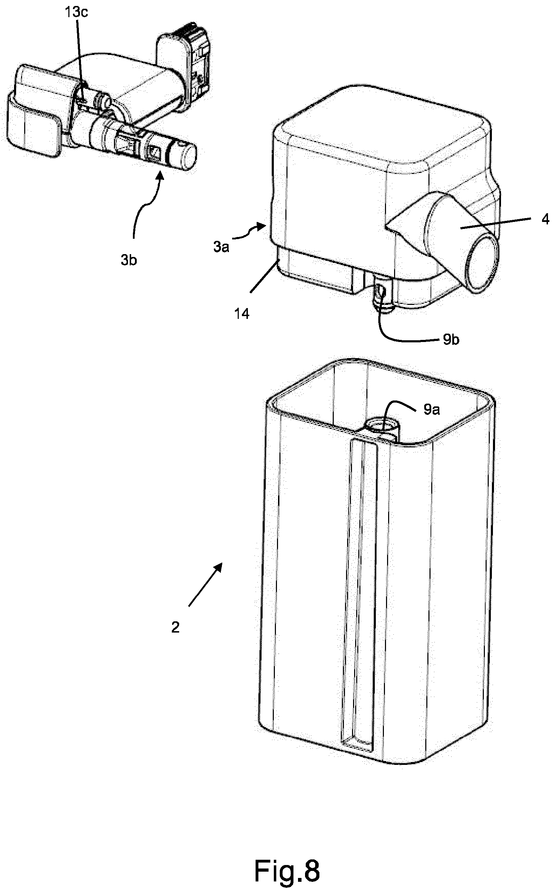

figures 7 and 8 show the device for frothing milk, with the lid separated from the milk container and broken down into the two parts of lid;

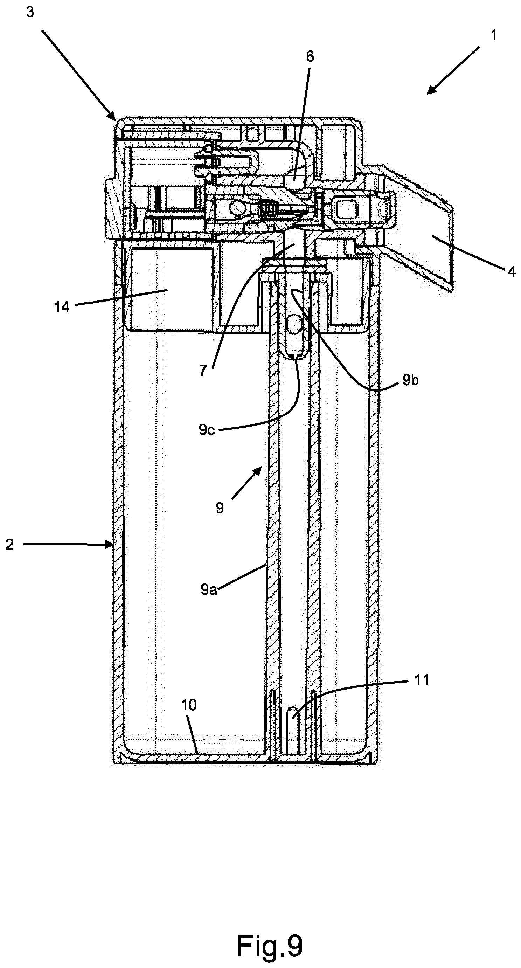

figure 9 shows a vertical section of the device for frothing milk;

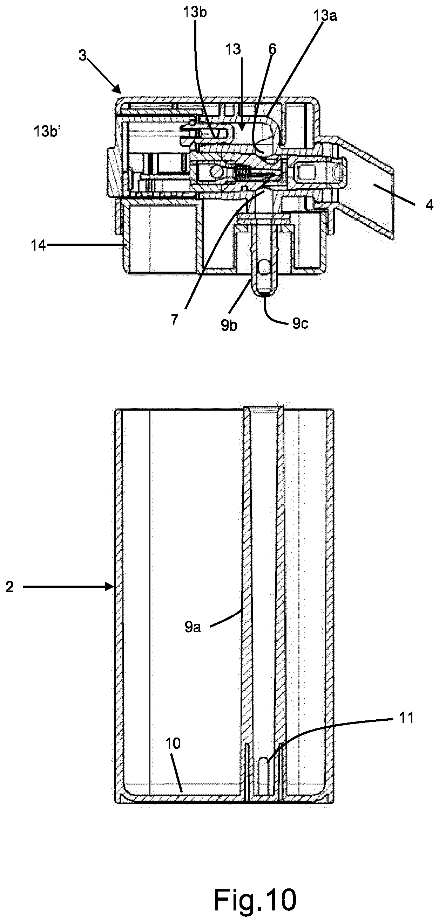

figure 10 shows a vertical section of the device for frothing milk with the lid separated from the milk container;

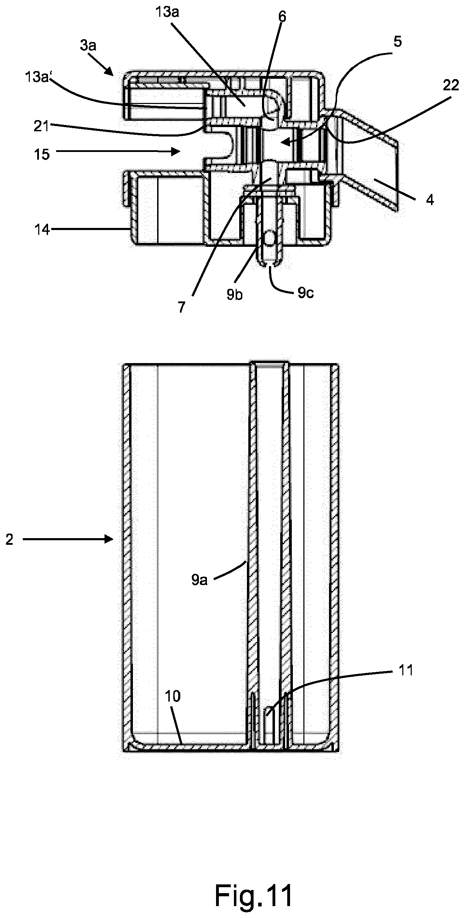

figure 11 shows a vertical section of the device for frothing milk with the lid separated from the milk container and from which the second part of lid has been removed;

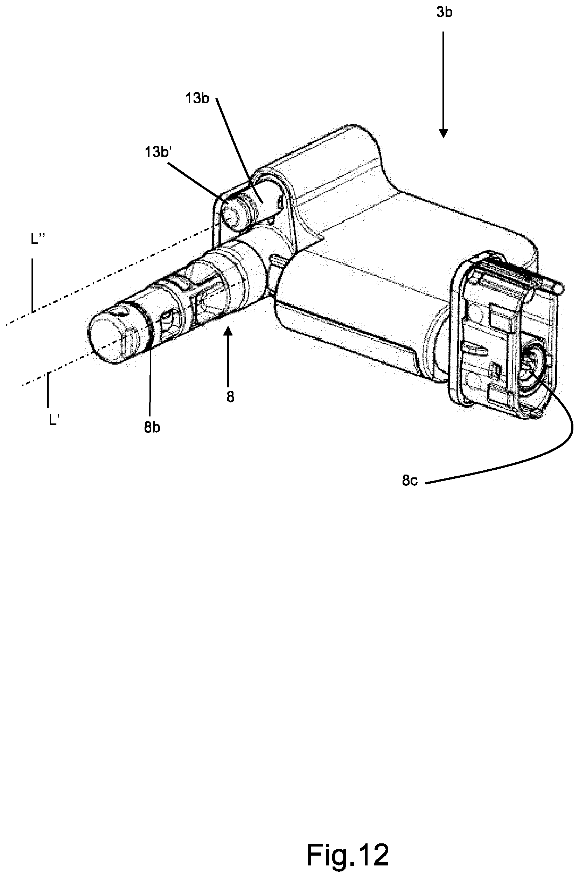

figure 12 shows in perspective the second part of the lid;

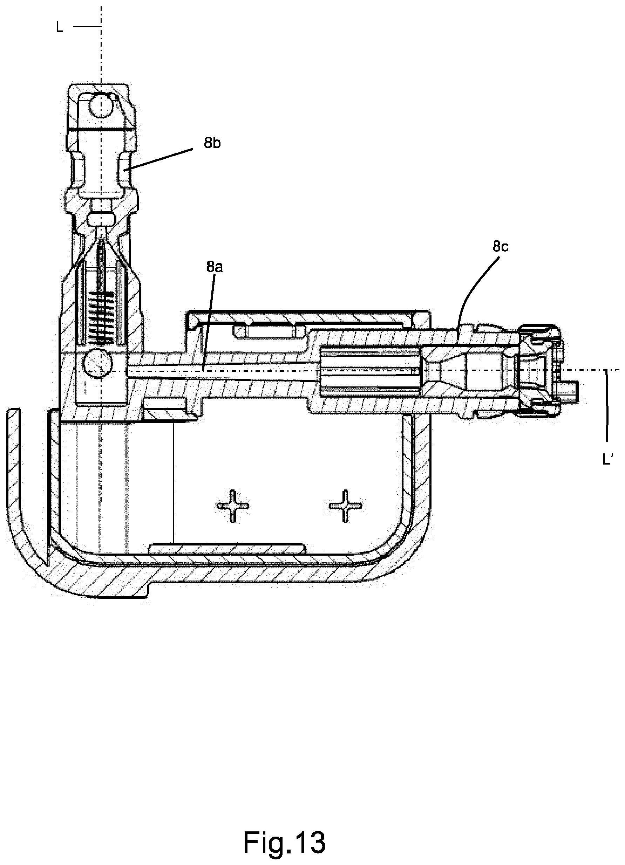

figure 13 shows a plan view of the second part of the lid sectioned in a horizontal plane;
figures 14a, 14b illustrate in perspective a variant of the milk container with the bottom openable for access to the lower end of the milk collection tube;
figure 15 shows in side elevation a vertical section of the milk container of figures 14a, 14b with the bottom in open configuration of access to the lower end of the milk collection tube;
figure 16 shows in side elevation a vertical section of the milk container of figures 14a, 14b with the bottom in closed configuration.

With reference to the aforementioned figures, a device for frothing milk indicated as a whole with reference numeral 1 is shown.

The device 1 comprises a milk container 2 provided with a removable closure lid 3.

The lid 3 can be removed from the container 2 to refill the container 2 with fresh milk once it is empty.

The lid 3 in turn is provided with an external milk dispenser 4.

The lid 2 has a hollow structure to house inside it, as we will see, some components of the device 1.

The lid 3 in fact houses a manifold body 5 having a Venturi-effect air suction opening 6 and a Venturi-effect milk suction opening 7.

The lid 3 also houses a steam injector 8 in the manifold body 5 for triggering the Venturi effect. Advantageously, the device 1 comprises a tube for collecting milk 9 from the container 2, which can be separated into a first truncated tube 9a connected to the container 2 and a second truncated tube 9b connected to the lid 3 and communicating with the milk suction opening 7. The second truncated tube 9b connected to the lid 3 extends vertically and has a vertical upward outlet route communicating with the milk suction opening 7.

A calibrated minimum milk passage opening 9c along the milk collection tube 9c is advantageously formed in the second truncated tube 9b of the milk collection tube 9c.

The first truncated tube 9a of the milk collection tube 9 is formed in a single piece with the container 2.

The milk collection tube 9 extends inside the milk container 9 and in particular the first truncated tube 9a of the milk collection tube 9 extends vertically from a bottom 10 of the milk container 2 at which it has a milk inlet route 11.

The lid 3 has a first part 3a and a second part 3b which are removably engageable.

The first part of lid 3a houses the manifold body 5 while the second part of lid 3b houses the steam injector 8.

The steam injector 8 comprises an injection conduit 8a having a first terminal 8b for coupling connection in the manifold body 5 and a second terminal 8c for coupling connection with a steam dispenser 12.

Typically the steam dispenser 12 is the one commonly available in a coffee machine 16.

The first connection terminal 8b and the second connection terminal 8c of the steam injector 8 have transverse coupling axes L, L'.

In particular, the transverse coupling axes L, L' of the first connection terminal 8b and of the second connection terminal 8c of the steam injector 8 are horizontal.

The injection conduit 8a of the steam injector 8 has a 90° bend connecting the first connection terminal 8b and the second connection terminal 8c.

The lid 3 houses a conduit for collecting air 13 from the external atmospheric environment.

The air collection conduit 13 is connected to the air suction opening 6 and comprises a first part of air collection conduit 13a housed in the first part of lid 3a and a second part of air collection conduit 13b housed in the second part of lid 3b.

The air collection conduit 13 has, at the second part of air collection conduit 13b, a calibrated air inlet opening 13c that puts the air collection conduit 13 in communication with the atmospheric environment outside the device 1.

The first part of air collection conduit 13a and the second part of air collection conduit 13b have terminals 13a', 13b' for mutual coupling connection having a coupling axis L" parallel to the coupling axis L of the first connection terminal 8b of the steam injection conduit 8a.

The first part of lid 3a has a portion 14 for closing the milk container 2 surmounted by a housing compartment 15 of the second part of lid 3b.

The compartment 15 matches with the external outline of the second part of lid 3b.

The compartment 15 has walls 15a, 15b, 15c for guiding the sliding of the second part of lid 3b in the direction of the coupling axis L of the first terminal 8b of the steam injector 8.

The compartment 15 is configured like an introduction slot of the second part of lid 3b.

The first part of lid 3a preferably comprises at least two pieces, of which a first rubber piece, for example silicone, and a second stiffer piece for example plastic or metal, where the first piece comprises the manifold body 5, the first part of air collection conduit 13a , and the second truncated tube 9b of the milk collection tube 9, while the second stiffer piece comprises an external shell including the external milk dispenser 4 and the portion 14 for closing the container 2.

The first rubber piece further comprises a fitting 21 for coupling connection of the steam injector 8 with the manifold body 5 for accessing the steam in the manifold body 5 and a fitting 22 for coupling connection of the external milk dispenser 4 with the manifold body 5 for the exit of the frothed milk from the manifold body 5.

The provision of a coupling connection between a part made of soft material and a part made of stiffer material ensures fluid tightness.

In particular, fluid tightness is ensured in the coupling connection: between the second truncated tube 9b, typically made of rubber, and the first truncated tube 9a, typically made of plastic, of the milk collection tube 9; between the fitting 21, typically made of rubber, and the steam injector 8, typically made of plastic or metal; between the first part of air collection conduit 13a, typically made of rubber, and the second part of air collection conduit 13b, typically made of plastic; and between the fitting 22, typically made of rubber, and the external milk dispenser 4, typically made of plastic or metal.

In an exemplary embodiment solution, the passage opening of the first truncated tube 9a of the tube 9 for collecting milk 9 has a diameter comprised between about 8 mm and 14 mm to allow easy cleaning with water or a brush.

The second truncated tube 9b of the milk collection tube 9 has an external diameter comprised between 8.5 and 14.5 mm to facilitate the coupling connection with the first truncated tube 9a of the milk collection tube 9.

The calibrated minimum milk passage opening 9c has a diameter comprised between 0.5 mm and 2 mm.

The size of the calibrated minimum milk passage opening 9c determines the flow rate of the milk sucked from the container 2 through Venturi effect triggered by the steam and therefore the ratio between steam flow and milk flow.

For example, a calibrated minimum milk passage opening 9c having a diameter of 0.7 mm can allow the suction of a milk flow of about 150 ml/min which is heated from 5°C to 60°C thanks to the heat exchange with the steam which will then be present in condensed form in the product dispensed by the external milk dispenser 4 with a weight comprised between 10% and 30% of the weight of the dispensed product.

In addition, the calibrated air inlet opening 13c has an equivalent diameter comprised between 0.1 mm and 0.4 mm so as to allow an air suction from 2 cc/s to 8 cc\s useful for frothing the milk.

The device 1 can be fed, as mentioned, by a steam dispenser 12, typically a nozzle normally provided in a coffee machine 16.

The steam dispenser 12 extends with horizontal axis in front-rear direction of the coffee machine 16.

The coffee machine 16 usually has a hydraulic circuit (not shown) which provides in cascade a water source, a water supply pump, a boiler and an infuser.

The hydraulic circuit of the coffee machine 16 also comprises a steam production line having the steam dispenser 12 as a terminal.

The water source can be a tank integrated into the coffee machine or a connection to the water mains.

The infuser is connected to an external coffee dispenser 17 supported by a front wall 18 of the coffee machine 16.

The steam dispenser 12 projects horizontally from the front wall 18 of the coffee machine 16. The external coffee dispenser 17 can dispense directly into a cup 19 below positioned on a front surface 20 for resting cups of the coffee machine 16.

When connected to the coffee machine 16 the device 1 is positioned in front of the front wall 18 of the coffee machine 16 and the steam dispenser 18 is coupled in the second terminal 8c of the steam injector 8.

In the connection position the container 2 rests on the cup rest surface 20 and the external dispenser 4 can dispense directly into the cup 19.

The cup rest surface 20 can be used as a guide for a horizontal movement of connection of the device 1 to the coffee machine 16.

The operation of the device 1 according to the invention is evident from what is described and illustrated and, in particular, is substantially the following.

The steam flow triggers a Venturi effect through which milk and air are sucked into the manifold body 5.

The steam flow recalls through Venturi effect a milk flow to which it provides a supply of thermal energy that results in an increase in temperature of the milk to be dispensed in the cup. The same steam flow recalls through Venturi effect, an air flow useful for frothing the milk to be dispensed in the cup.

The user can very easily disassemble the device 1 for cleaning.

In particular, access to the milk collection tube 9 can be performed with extreme simplicity: first of all, the device 1 is disconnected from the coffee machine 16 by removing the steam injector 8 from the external steam dispenser 12 by means of a horizontal pulling force in the direction of the axis L.

At this point the lid 3 is lifted from the container 2 by exerting a pulling force on the lid 3 until complete disconnection between the two truncated tubes 9a, 9b of the milk collection tube 9.

Finally, the second part 3b of the lid 3 is extracted from the first part 3a of the lid 3 by exerting a pulling force on the second part 3b of the lid 3 in the direction of the parallel axes L, L'' until complete disconnection between the two parts.

The cleaning components of the disassembled device 1 can be done in the dishwasher or by hand with water, special detergents and possibly a brush to be inserted along the first truncated tube 9a of the milk collection tube 9.

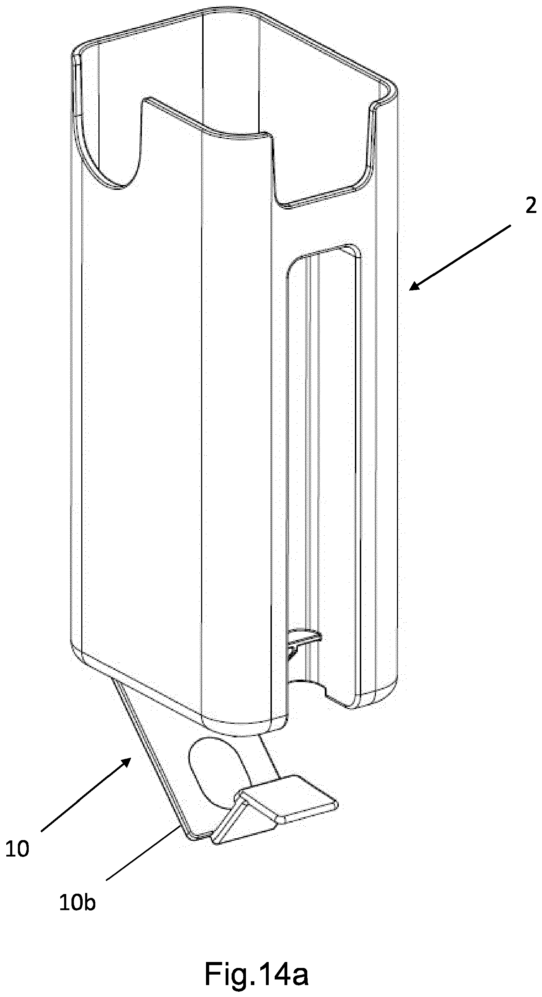

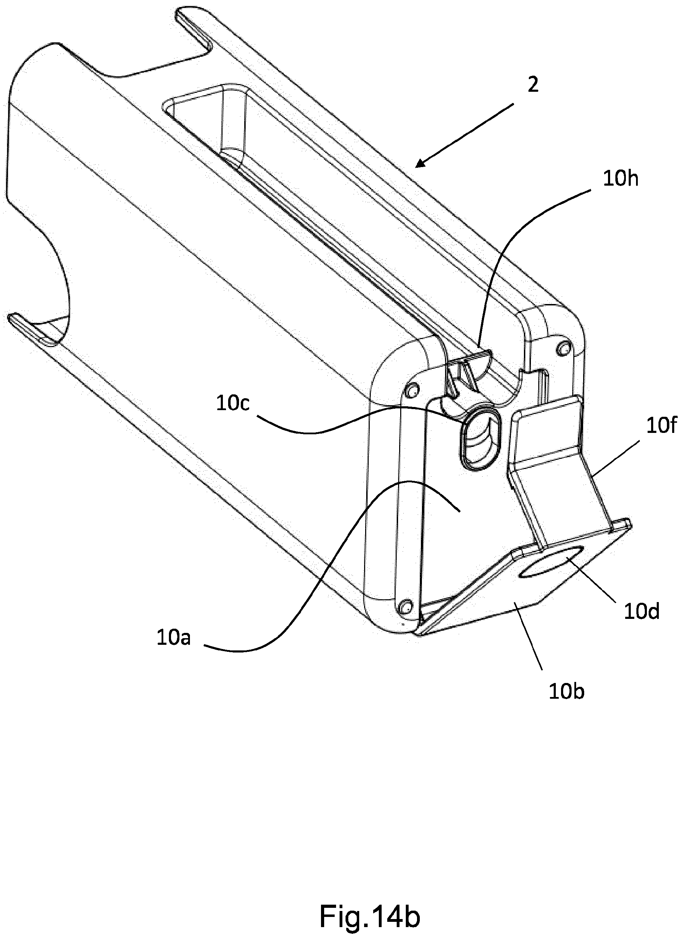

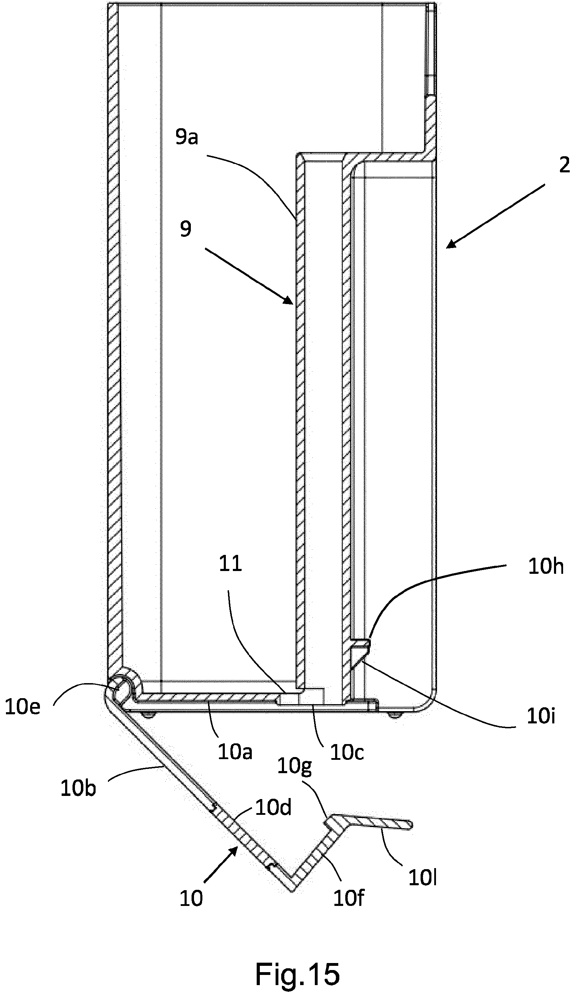

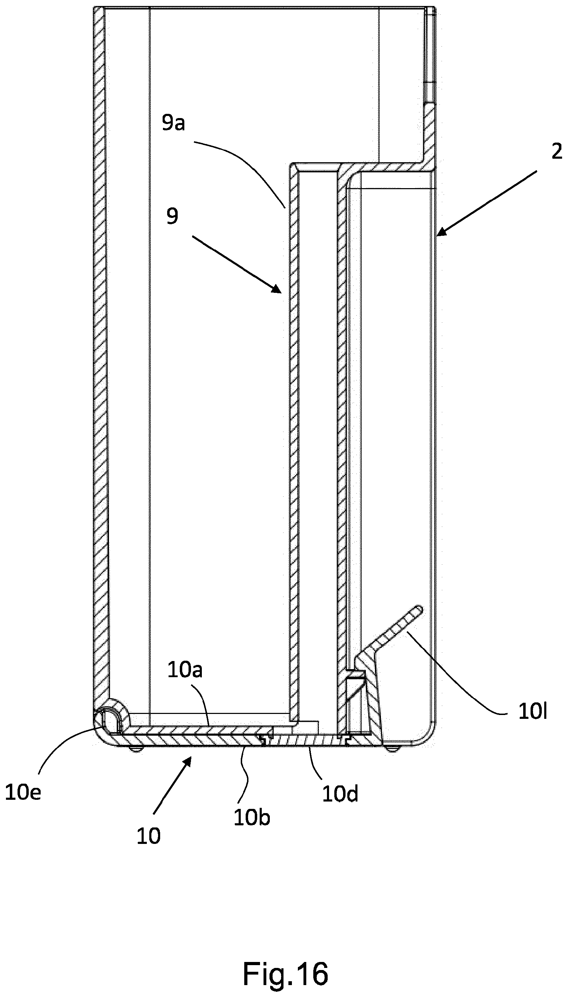

Figures 14a - 16 show a variant of the milk container 2 with the bottom 10 openable for access to the lower end of the milk collection tube 9.

This makes it possible to further improve inspection and cleaning operations.

The bottom 10 in this case advantageously provides a fixed internal wall 10a and a movable external wall 10b.

The fixed internal wall 10a has a through hole 10c facing the lower end of the milk collection tube 9.

The movable external wall 10b has a rubber insert 10d sealingly engageable with the through hole 10c of the fixed internal wall 10a for closing the same.

The movable external wall 10b is pivoted to the milk container 2 through a pin 10e to oscillate between an opening position and a closed position of the through hole 10c.

From an edge of the movable external wall 10b there extends at an angle a flexible lever 10f for actuating a tooth 10g engageable snap-fittingly in a coupling seat 10h provided on the external side of the side wall of the milk container 2 to lock the movable external wall 10b in the closed position of the through hole 10c of the fixed internal wall 10a.

During the closing movement of the movable external wall 10b, the tooth 10g slidingly engages along an inclined plane 10i which causes the lever 10f to bend: when it climbs over the inclined plane 10h, the tooth 10g snaps into the coupling seat 10h.

To release the coupling tooth 10g from the coupling seat 10g and thus unlock the movable external wall 10b, the flexible lever 10f has an angled hand grip end 10l.

The conceived device for frothing milk is susceptible to numerous modifications and variations, all falling within the scope of the inventive concept as disclosed in the Claims.

## Claims

1. A device (1) for frothing milk comprising: a milk container (2), a lid (3) removably connected to said milk container (2), where the lid (3) is provided with an external milk dispenser (4) and houses a manifold body (5) having a Venturi-effect air suction opening (6) and a Venturi-effect milk suction opening (7), and a steam injector (8) in the manifold body (5) for triggering the Venturi effect, the device further comprising a tube for collecting milk (9) from the container (2) which can be separated into a first truncated tube (9a) and a second truncated tube (9b) connected to said lid (3) and communicating with said milk suction opening (7), the device being **characterised in that** the first truncated tube (9a) is connected to said container (2) and **in that** said milk collection tube (9) is having at said second truncated tube (9b) a calibrated minimum milk passage opening (9c).

2. The device (1) for frothing milk according to claim 1, **characterised in that** said first truncated tube (9a) is formed in a single piece with said container (2) and extends vertically from a bottom (10) of said container at which it has a milk inlet route (11) and said second truncated tube (9b) extends vertically and has an upward vertical outlet route communicating with said milk suction opening (7).

3. The device (1) for frothing milk according to any preceding claim, **characterised in that** said lid (3) has a first part (3a) and a second part (3b) which are removably engageable, where said first part of lid (3a) houses said manifold body (5) and said second part of lid (3b) houses said steam injector (8).

4. The device (1) for frothing milk according to any preceding claim, **characterised in that** said steam injector (8) comprises an injection conduit (8a) having a first terminal (8b) for coupling connection in said manifold body (5) and a second terminal (8c) for coupling connection with a steam dispenser (12).

5. The device (1) for frothing milk according to the preceding claim, **characterised in that** said first connection terminal (8b) and said second connection terminal (8c) have transverse coupling axes (L, L').

6. The device (1) for frothing milk according to the preceding claim, **characterised in that** said transverse coupling axes (L, L') are horizontal.

7. The device (1) for frothing the milk according to any preceding claim 5 and 6, **characterised in that** said injection conduit (8a) has a 90° bend.

8. The device (1) for frothing milk according to any preceding claim, **characterised in that** said lid (3) houses a conduit for collecting air (13) from the external atmospheric environment, where said air collection conduit (13) is connected to said air suction opening (6) and comprises a first part of air collection conduit (13a) housed in said first part of lid (3a) and a second part of air collection conduit (13b) housed in said second part of lid (3b).

9. The device (1) for frothing milk according to the preceding claim, **characterised in that** said first part of air collection conduit (13a) and said second part of air collection conduit (13b) have mutual connection terminals having a coupling axis (L") parallel to the coupling axis (L) of said first connection terminal (8b) of said injection conduit (8a).

10. The device (1) for frothing milk according to any claim from 3 to 9, **characterised in that** said first part of lid (3a) has a portion (14) for closing the milk container (2) surmounted by a compartment (15) for housing said second part of lid (3b).

11. The device (1) for frothing milk according to the preceding claim, **characterised in that** said compartment (15) matches the external outline of said second part of lid (3b).

12. The device (1) for frothing milk according to the preceding claim, **characterised in that** said compartment (15) has walls (15a, 15b, 15c) for guiding the sliding of said second part of lid (3b) in the direction of said coupling axis (L) of said first terminal (8b).

13. The device (1) for frothing milk according to the preceding claim, **characterised in that** said compartment (15) is configured like an introduction slot of said second part of lid (3b).

14. The device (1) for frothing milk according to any one of claims 2 to 13, **characterised in that** the bottom (10) of said milk container (2) has an openable and reclosable through hole (10c) facing the lower end of said milk collection tube (9).

## Patentansprüche

1. Vorrichtung (1) zum Aufschäumen von Milch, umfassend: einen Milchbehälter (2), einen Deckel (3), der lösbar mit dem Milchbehälter (2) verbunden ist, wobei der Deckel (3) mit einem äußeren Milchspender (4) versehen ist und einen Verteilerkörper (5) aufnimmt, der eine Luftansaugöffnung (6) mit Venturi-Effekt und eine Milchansaugöffnung (7) mit Venturi-Effekt aufweist, sowie einen Dampfinjektor (8) in dem Verteilerkörper (5) zum Auslösen des Venturi-Effekts, wobei die Vorrichtung ferner ein Rohr zum Ansaugen von Milch (9) aus dem Behälter (2) umfasst, das in ein erstes Rohrstück (9a) und ein zweites Rohrstück (9b) unterteilt werden kann, wobei das zweite Rohrstück (9b) mit dem Deckel (3) verbunden ist und mit der Milchansaugöffnung (7) kommuniziert, wobei die Vorrichtung **dadurch gekennzeichnet ist, dass** das erste Rohrstück (9a) mit dem Behälter (2) verbunden ist und dass das Milchansaugrohr (9) an dem zweiten Rohrstück (9b) eine kalibrierte minimale Milchdurchlassöffnung (9c) aufweist.

2. Vorrichtung (1) zum Aufschäumen von Milch nach Anspruch 1, **dadurch gekennzeichnet, dass** das erste Rohrstück (9a) einstückig mit dem Behälter (2) ausgebildet ist und sich vertikal von einem Boden (10) des Behälters erstreckt, an dem es einen Milcheintrittsweg (11) aufweist, und dass das zweite Rohrstück (9b) sich vertikal erstreckt und einen nach oben gerichteten vertikalen Austrittsweg aufweist, der mit der Milchansaugöffnung (7) kommuniziert.

3. Vorrichtung (1) zum Aufschäumen von Milch nach einem der vorhergehenden Ansprüche, **dadurch gekennzeichnet, dass** der Deckel (3) einen ersten Teil (3a) und einen zweiten Teil (3b) aufweist, die lösbar miteinander in Eingriff bringbar sind, wobei der erste Deckelteil (3a) den Verteilerkörper (5) aufnimmt und der zweite Deckelteil (3b) den Dampfinjektor (8) aufnimmt.

4. Vorrichtung (1) zum Aufschäumen von Milch nach einem der vorhergehenden Ansprüche, **dadurch gekennzeichnet, dass** der Dampfinjektor (8) eine Injektionsleitung (8a) umfasst, die einen ersten Endabschnitt (8b) zur Kupplungsverbindung in dem Verteilerkörper (5) und einen zweiten Endabschnitt (8c) zur Kupplungsverbindung mit einem Dampfspender (12) aufweist.

5. Vorrichtung (1) zum Aufschäumen von Milch nach dem vorhergehenden Anspruch, **dadurch gekennzeichnet, dass** der erste Anschlussendabschnitt (8b) und der zweite Anschlussendabschnitt (8c) quer verlaufende Kupplungsachsen (L, L') aufweisen.

6. Vorrichtung (1) zum Aufschäumen von Milch nach dem vorhergehenden Anspruch, **dadurch gekennzeichnet, dass** die quer verlaufenden Kupplungsachsen (L, L') horizontal sind.

7. Vorrichtung (1) zum Aufschäumen von Milch nach einem der vorhergehenden Ansprüche 5 und 6, **dadurch gekennzeichnet, dass** die Injektionsleitung (8a) eine 90°-Biegung aufweist.

8. Vorrichtung (1) zum Aufschäumen von Milch nach einem der vorhergehenden Ansprüche, **dadurch gekennzeichnet, dass** der Deckel (3) eine Leitung zum Ansaugen von Luft (13) aus der äußeren atmosphärischen Umgebung aufnimmt, wobei die Luftansaugleitung (13) mit der Luftansaugöffnung (6) verbunden ist und einen ersten Teil der Luftansaugleitung (13a), der in dem ersten Deckelteil (3a) aufgenommen ist, sowie einen zweiten Teil der Luftansaugleitung (13b), der in dem zweiten Deckelteil (3b) aufgenommen ist, umfasst.

9. Vorrichtung (1) zum Aufschäumen von Milch nach dem vorhergehenden Anspruch, **dadurch gekennzeichnet, dass** der erste Teil der Luftansaugleitung (13a) und der zweite Teil der Luftansaugleitung (13b) gegenseitige Anschlussendabschnitte aufweisen, die eine Kupplungsachse (L") besitzen, welche parallel zur Kupplungsachse (L) des ersten Anschlussendabschnitts (8b) der Injektionsleitung (8a) ist.

10. Vorrichtung (1) zum Aufschäumen von Milch nach einem der Ansprüche 3 bis 9, **dadurch gekennzeichnet, dass** der erste Deckelteil (3a) einen Abschnitt (14) zum Verschließen des Milchbehälters (2) aufweist, der von einem Fach (15) zur Aufnahme des zweiten Deckelteils (3b) überragt wird.

11. Vorrichtung (1) zum Aufschäumen von Milch nach dem vorhergehenden Anspruch, **dadurch gekennzeichnet, dass** das Fach (15) dem äußeren Umriss des zweiten Deckelteils (3b) entspricht.

12. Vorrichtung (1) zum Aufschäumen von Milch nach dem vorhergehenden Anspruch, **dadurch gekennzeichnet, dass** das Fach (15) Wände (15a, 15b, 15c) zum Führen des Gleitens des zweiten Deckelteils (3b) in Richtung der Kupplungsachse (L) des ersten Endabschnitts (8b) aufweist.

13. Vorrichtung (1) zum Aufschäumen von Milch nach dem vorhergehenden Anspruch, **dadurch gekennzeichnet, dass** das Fach (15) als Einführungsschlitz für den zweiten Deckelteil (3b) ausgebildet ist.

14. Vorrichtung (1) zum Aufschäumen von Milch nach einem der Ansprüche 2 bis 13, **dadurch gekennzeichnet, dass** der Boden (10) des Milchbehälters (2) ein öffenbares und wieder verschließbares Durchgangsloch (10c) aufweist, das dem unteren Ende des Milchansaugrohrs (9) gegenüberliegt.

## Revendications

1. Dispositif (1) pour faire mousser du lait, comprenant : un récipient à lait (2), un couvercle (3) raccordé de manière amovible audit récipient à lait (2), dans lequel le couvercle (3) est pourvu d'un distributeur externe de lait (4) et loge un corps collecteur (5) présentant une ouverture d'aspiration d'air (6) à effet Venturi et une ouverture d'aspiration de lait (7) à effet Venturi, ainsi qu'un injecteur de vapeur (8) dans le corps collecteur (5) pour déclencher l'effet Venturi, le dispositif comprenant en outre un tube de prélèvement de lait (9) depuis le récipient (2), lequel peut être séparé en un premier tronçon de tube (9a) et un second tronçon de tube (9b) raccordé audit couvercle (3) et communiquant avec ladite ouverture d'aspiration de lait (7), le dispositif étant **caractérisé en ce que** le premier tronçon de tube (9a) est raccordé audit récipient (2) et **en ce que** ledit tube de prélèvement de lait (9) présente, au niveau dudit second tronçon de tube (9b), une ouverture calibrée minimale de passage du lait (9c).

2. Dispositif (1) pour faire mousser du lait selon la revendication 1, **caractérisé en ce que** ledit premier tronçon de tube (9a) est réalisé d'une seule pièce avec ledit récipient (2) et s'étend verticalement depuis un fond (10) dudit récipient, au niveau duquel il présente un trajet d'entrée du lait (11), et **en ce que** ledit second tronçon de tube (9b) s'étend verticalement et présente un trajet de sortie vertical dirigé vers le haut communiquant avec ladite ouverture d'aspiration de lait (7).

3. Dispositif (1) pour faire mousser du lait selon l'une quelconque des revendications précédentes, **caractérisé en ce que** ledit couvercle (3) présente une première partie (3a) et une seconde partie (3b) pouvant être engagées l'une avec l'autre de manière amovible, dans lequel ladite première partie de couvercle (3a) loge ledit corps collecteur (5) et ladite seconde partie de couvercle (3b) loge ledit injecteur de vapeur (8).

4. Dispositif (1) pour faire mousser du lait selon l'une quelconque des revendications précédentes, **caractérisé en ce que** ledit injecteur de vapeur (8) comprend un conduit d'injection (8a) présentant une première extrémité (8b) pour un raccordement par emboîtement dans ledit corps collecteur (5) et une seconde extrémité (8c) pour un raccordement par emboîtement avec un distributeur de vapeur (12).

5. Dispositif (1) pour faire mousser du lait selon la revendication précédente, **caractérisé en ce que** ladite première extrémité de raccordement (8b) et ladite seconde extrémité de raccordement (8c) présentent des axes d'emboîtement transversaux (L, L').

6. Dispositif (1) pour faire mousser du lait selon la revendication précédente, **caractérisé en ce que** lesdits axes d'emboîtement transversaux (L, L') sont horizontaux.

7. Dispositif (1) pour faire mousser du lait selon l'une quelconque des revendications précédentes 5 et 6, **caractérisé en ce que** ledit conduit d'injection (8a) présente un coude à 90°.

8. Dispositif (1) pour faire mousser du lait selon l'une quelconque des revendications précédentes, **caractérisé en ce que** ledit couvercle (3) loge un conduit de prélèvement d'air (13) depuis l'environnement atmosphérique extérieur, dans lequel ledit conduit de prélèvement d'air (13) est raccordé à ladite ouverture d'aspiration d'air (6) et comprend une première partie de conduit de prélèvement d'air (13a) logée dans ladite première partie de couvercle (3a) et une seconde partie de conduit de prélèvement d'air (13b) logée dans ladite seconde partie de couvercle (3b).

9. Dispositif (1) pour faire mousser du lait selon la revendication précédente, **caractérisé en ce que** ladite première partie de conduit de prélèvement d'air (13a) et ladite seconde partie de conduit de prélèvement d'air (13b) présentent des extrémités de raccordement mutuel ayant un axe d'emboîtement (L") parallèle à l'axe d'emboîtement (L) de ladite première extrémité de raccordement (8b) dudit conduit d'injection (8a).

10. Dispositif (1) pour faire mousser du lait selon l'une quelconque des revendications 3 à 9, **caractérisé en ce que** ladite première partie de couvercle (3a) présente une portion (14) de fermeture du récipient à lait (2), surmontée par un logement (15) destiné à recevoir ladite seconde partie de couvercle (3b).

11. Dispositif (1) pour faire mousser du lait selon la revendication précédente, **caractérisé en ce que** ledit logement (15) correspond au contour extérieur de ladite seconde partie de couvercle (3b).

12. Dispositif (1) pour faire mousser du lait selon la revendication précédente, **caractérisé en ce que** ledit logement (15) présente des parois (15a, 15b, 15c) pour guider le coulissement de ladite seconde partie de couvercle (3b) dans la direction dudit axe d'emboîtement (L) de ladite première extrémité (8b).

13. Dispositif (1) pour faire mousser du lait selon la revendication précédente, **caractérisé en ce que** ledit logement (15) est configuré comme une fente d'introduction de ladite seconde partie de couvercle (3b).

14. Dispositif (1) pour faire mousser du lait selon l'une quelconque des revendications 2 à 13, **caractérisé en ce que** le fond (10) dudit récipient à lait (2) présente un trou traversant (10c) ouvrable et refermable faisant face à l'extrémité inférieure dudit tube de prélèvement de lait (9).
